# EUROPÄISCHE PATENTANMELDUNG

(11) **EP 1 426 641 A1**
(43) Veröffentlichungstag der Anmeldung: **09.06.2004**
(21) Anmeldenummer: 02102687.7
(22) Anmeldetag: 05.12.2002
(51) Int. Cl.: F16D 27/00, F16D 29/00

(54) **Kupplungs-Betätigungseinrichtung**

(71) Anmelder: Getrag Ford Transmissions GmbH, 50725 Köln (DE)
(72) Erfinder: Doelling, Matthias, 51429 Bergisch-Gladbach (DE); Giesen, Udo, 50259 Pulheim (DE)
(74) Vertreter: Drömer, Hans-Carsten, Dr.-Ing.

(57) **Zusammenfassung**

Die Erfindung bezieht sich auf eine Kupplungs- Betätigungseinrichtung elektromechanischer Bauart insb. für eine Fahrzeugkupplung, umfassend ein Gehäuse 11 mit einer dazugehörigen Gehäuseabdeckung, ein translatorisch die Kupplung betätigendes Ausrückelement 12, einen auf das Ausrückelement 12 über einen Gewindetrieb 13 einwirkenden Elektromotor 14, wobei der Gewindetrieb 13 zur Umwandlung der von dem Elektromotor 14 ausgehenden Rotationsbewegung in eine Translationsbewegung für das Ausrückelement 12 ausgebildet ist und wobei der Gewindetrieb 13 im wesentlichen eine verdrehfest mit der Motorwelle 15 des Elektromotors 14 verbundene Gewindespindel 16 und eine axial auf dieser in jeder Richtung bis zu einer Endposition verschiebbare, eine Verdrehsicherung 18 aufweisende Mutter 17 umfaßt, und umfassend wenigstens eine die abzugebende Leistung des Elektromotors 14 verringernde, auf den Gewindetrieb 13 einwirkende Kompensationsfeder 19. Es ist dabei die Kompensationsfeder 19 baulich getrennt von dem, im wesentlichen parallel zu dem auf das Ausrückelement 12 einwirkenden Gewindetrieb 13 angeordnet und zur Übertragung der Kraft der Kompensationsfeder 19 auf den Gewindetrieb 13 ist wenigstens ein auf die Mutter 17 des Gewindetriebes 13 einwirkender, durch die Kompensationsfeder 19 federbelasteter Kniehebel 20 vorgesehen.

## Beschreibung

Die Erfindung bezieht sich auf eine Kupplungs- Betätigungseinrichtung elektromechanischer Bauart insb. für eine Fahrzeugkupplung, z.B. für automatisierte manuelle Übertragungssysteme, umfassend ein Gehäuse mit einer dazugehörigen Gehäuseabdeckung, ein translatorisch die Kupplung betätigendes Ausrückelement, einen auf das Ausrückelement über einen Gewindetrieb einwirkenden Elektromotor, wobei der Gewindetrieb zur Umwandlung der von dem Elektromotor ausgehenden Rotationsbewegung in eine Translationsbewegung für das Ausrückelement ausgebildet ist und wobei der Gewindetrieb im wesentlichen eine verdrehfest mit der Motorwelle des Elektromotors verbundene Gewindespindel und eine axial auf dieser in jeder Richtung bis zu einer Endposition verschiebbare, eine Verdrehsicherung aufweisende Mutter umfaßt, und umfassend wenigstens eine die abzugebende Leistung des Elektromotors verringernde, auf den Gewindetrieb einwirkende Kompensationsfeder.

Aus dem Stand der Technik sind verschiedene Kupplungs- Betätigungseinrichtungen elektromechanischer Bauart insb. für eine Fahrzeugkupplung bekannt. Die bekannten Anordnungen dienen dabei alle auch u.a. dazu, während des Kupplungsvorganges eine i.w. gleichmäßige Kupplungskraft bereitzustellen. So ist z.B. aus der DE 43 20 204 A1 ein Stellantrieb für eine hydraulisch betätigbare Kraftfahrzeug- Reibungskupplung bekannt, der einen mit einem hydraulischen Nehmerzylinder der Reibungskupplung zu verbindenden, hydraulischen Geberzylinder mit einem in Richtung seiner Zylinderachse verschiebbaren Kolben umfaßt, des weiteren einen mit dem Geberzylinder zu einer Baueinheit fest verbundenen Elektromotor mit einer um eine Drehachse rotierenden Motorwelle und ein die Motorwelle unter Umsetzung ihrer Drehbewegung in eine Verschiebebewegung mit dem Kolben des Geberzylinders kuppelndes Getriebe. Die Motorwelle und der Geberzvlinder sind dabei gleichachsig hintereinander angeordnet, weiterhin ist das Getriebe als zur Motorwelle gleichachsiger Gewindetrieb ausgebildet, dessen drehfest mit der Motorwelle verbundene Gewindespindel mit einer relativ zum Geberzylinder verdrehfest, aber axial verschiebbar geführten, mit dem Kolben verbundenen Spindelmutter verschraubbar ist und der Kolben weist auf der dem Elektromotor zugewandten Seite eine zentrische Aussparung für den axialen Eingriff der Gewindespindel auf. Es kann dabei bei einer Ausführungsform die Gewindespindel als integrale Verlängerung der Motorwelle ausgebildet sein, weiterhin kann axial zwischen dem Kolben und einer relativ zum Geberzylinder festen Anschlagfläche eine die Gewindespindel umschließende, als Schraubendruckfeder ausgebildete Kompensationsfeder angeordnet sein, die den Kolben in Auskuppel- Verschieberichtung belastet. Es soll ein solcher Stellantrieb aus einigen wenigen Komponenten aufgebaut werden können und nur vergleichsweise wenig Bauraum benötigen, da der Kolben des Geberzylinders für die Unterbringung der Gewindespindel mit ausgenutzt wird. Da der Geberzylinder und der Elektromotor wie auch die Gewindespindel gleichachsig zueinander angeordnet sind, sollen auf den Kolben ausgeübte, dessen Dichtungen beanspruchende Querkräfte vermieden werden. Nachteilig ist allerdings bei dieser Anordnung die relativ hohe effektive Belastung des Elektromotors, wünschenswert ist es hier Abhilfe zu schaffen, weiterhin wünschenswert ist es bei dieser Anordnung, die Betätigung für die Kraftfahrzeug- Kupplung hinsichtlich ihres Aufbaus und ihrer Funktionseigenschaften weiter zu verbessern, wobei sie z.B. auch für Anordnungen mit hohen Drehmomenten einsetzbar sein soll, dabei sollen insb. in den beiden Endzuständen der Kupplung stabile Zustände geschaffen werden, ohne dabei zusätzliche Energie z.B. über den Elektromotor aufbringen zu müssen.

Aus dem Stand der Technik ist weiterhin aus der DE 295 11 623 U1 eine Reibungskupplung bekannt, mit einem Stellantrieb für den automatisierten Betrieb, umfassend eine vom Stellantrieb getrennt angeordnete Steuerelektronik, einen Elektromotor, ein Untersetzungsgetriebe mit Gehäuse, dessen Eingangsteil vom Elektromotor angetrieben wird und dessen Ausgangsteil über ein Übertragungselement mit den Betätigungselementen der Reibungskupplung in Wirkverbindung steht, eine Ausgleichsfeder zur Unterstützung der Betätigungskraft der Reibungskupplung sowie eine Einrichtung zum automatischen Ausgleich des Verschleißes innerhalb der Reibungskupplung zur Konstanthaltung der Betätigungskraft der Reibungskupplung. Die Anordnung ist dabei derart beschaffen, daß der Elektromotor über das als Stirnradgetriebe ausgebildete Untersetzungsgetriebe ein Segmentzahnrad antreibt, wodurch ein Übertragungselement die Ausrückgabel derart bewegt, daß ein Ausrücklager die Federzungen einer Membranfeder in Richtung auf ein Schwungrad zu bewegt, so daß eine Anpreßplatte vom Schwungrad abhebt und die Reibbeläge einer Kupplungsscheibe freigibt. Diese Bewegung wird durch eine Ausgleichsfeder unterstützt, die im eingerückten Zustand der Kupplung eine sogenannte Übertotpunktstellung einnimmt und in diesem Zustand keine Kraft auf das System ausübt. Es sorgt dabei außerdem die Einrichtung zum automatischen Ausgleich des Verschleißes zusammen mit einer Wegbegrenzungeinrichtung dafür, daß bei aufgetretenem Verschleiß an den Reibbelägen und bei ausgekuppelter Stellung die Anpreßplatte in ihrer Ausrückbewegung nach Lüften der Kupplungsscheibe begrenzt wird, so daß der dabei entstehende Spalt zwischen dem Außendurchmesser der Membranfeder und einem Drehring durch Verdrehen des Drehringes durch die Feder ausgeglichen wird. Dadurch wird erreicht, daß über die gesamte Lebensdauer der Reibungskupplung die Membranfeder ihre Stellung innerhalb des Kupplungsgehäuses exakt beibehält und somit ihre Anpreßkraft sowie auch ihre Ausrückkraft konstant hält. Damit können sämtliche Teile der Betätigungseinrichtung genau auf diese Membranfederkraft abgestimmt werden und es müssen keine Sicherheitszuschläge vorgesehen werden. Dies gilt auch für die Bereitstellung des maximalen Steuerstromes für den Elektromotor. Mit dieser Anordnung soll insgesamt erreicht werden, eine Reibungskupplung mit einem Stellantrieb für automatisierten Betrieb so auszugestalten, daß der Stellantrieb einen minimalen Raumbedarf aufweist, mit einem sehr geringen Gewicht auskommt und daher preiswert zu erstellen ist, wobei die Steuerelektronik aus dem Stellantrieb ausgegliedert werden soll. Nachteilig ist bei dieser Anordnung insb. deren aufwendiger konstruktiver Aufbau, auch hier liegt eine recht hohe effektive Belastung des Elektromotors vor und eine Verbesserung des Aufbaus und der Funktionseigenschaften der Anordnung ist hier ebenfalls wünschenswert.

Aus der DE 42 38 368 A1 ist ferner ein Stellantrieb für eine Kraftfahrzeug-Reibungskupplung oder ein Kraftfahrzeuggetriebe bekannt, wobei dieser Stellantrieb von einem Elektromotor angetrieben wird, der von einer Steuerelektronik angesteuert wird. Der Elektromotor wirkt über ein Untersetzungsgetriebe auf ein Ausgangsteil, welches mit den Betätigungselementen der Reibungskupplung in Wirkverbindung steht. Das Untersetzungsgetriebe ist als Sirnradgetriebe ausgebildet, welches einen besonders guten Wirkungsgrad aufweisen soll. Auf das Ausgangsteil des Getriebes wirkt eine Ausgleichsfeder, die beim Ausrücken der Reibungskupplung den Elektromotor unterstützt. Im Getriebegehäuse ist gleichzeitig die Steuerelektronik untergebracht, die den Elektromotor ansteuert. Es ist dabei in einer bevorzugten Ausführungsform zur Verhinderung einer ungewollten Verstellung des Stellantriebes in seinen Endstellungen, insb. der die Reibungskupplung vollständig eingekuppelt haltenden Endstellung, in welcher der Elektormotor nicht erregt ist, vorgesehen, das dem ersten Zahnrad Arretierungsmittel zugeordnet sind, die es in zumindest einer seiner Endstellungen, insb. der die Reibungskupplung vollständig einkuppelnden Endstellung, arretieren. Die Arretierungsmittel können hierbei unmittelbar an dem ersten Zahnrad angreifen, aber auch an einem mit dem Zahnrad antriebsmäßig oder abtriebsmäßig verbundenen Teil. Bei den Arretierungsmitteln kann es sich um eine zwischen dem Getriebegehäuse und dem ersten Zahnrad eingespannte Feder wie einem Federkraftspeicher handeln, die das erste Zahnrad in einer Übertotpunktstellung arretiert. Es können weitere Arretierungsmittel wie Rastvorrichtungen vorgesehen sein. Das Arretierungsmittel wie Federkraftspeicher unterstützt das Antriebsmoment des Elektromotors bei der Betätigung eines Geberzylinders in Auskuppelrichtung, bei der Rückbewegung des von der Kupplungshauptfeder hierbei unterstützten Elektromotors wird der Federkraftspeicher wieder gespannt. Der Federkraftspeicher sorgt durch seine Anordnung in der Einkuppelstellung für eine Arretierung des Stellantriebes selbst bei stromlosen Elektromotor. Der hier beschriebene Stellantrieb soll sich gegenüber den vorbekannten Lösungen durch einen verbesserten Wirkungsgrad auszeichnen, nachteilig ist allerdings auch hier wieder der aufwendige konstruktive Aufbau, weiterhin ist auch hier eine recht hohe effektive Belastung des Elektromotors gegeben und eine Verbesserung des Aufbaus und der Funktionseigenschaften der Anordnung ist auch hier wiederum wünschenswert.

Schließlich ist aus der DE 33 09 427 C2 eine Vorrichtung zum Betätigen einer durch mindestens eine Tellerfeder zusammendrückbaren Reibscheibenkupplung bekannt, die über ein Gestänge während des Aus- und Einkuppelns in alle Stellungen bewegbar ist, wobei durch eine als Schraubenfeder ausgebildete Unterstützungsfeder eine Kraft auf das Gestänge gegen die Kraft der Tellerfeder gerichtet ist, und wobei das Gestänge eine um einen festen Gelenkpunkt verschwenkbare Schwinge aufweist, die über ein Ausrücklager die Tellerfeder betätigt. Die Schwinge ist im Bereich ihres einen Endes um den Gelenkpunkt verschwenkbar und an ihrem dem Gelenkpunkt abgewandten Ende bei einer Ausführungsform elektromotorisch über eine Verzahnung betätigbar, wobei in die Verzahnung ein Ritzel eingreift, an dem außermittig eine andererseits am Gehäuse befestigte Unterstützungsfeder derart angreift, daß die Lage der Kraftwirkungslinie der Unterstützungsfeder sich während des Ein- und Auskuppelns der Kupplung so ändert, daß die Unterstützungsfeder im eingekuppelten Zustand der Kupplung keine Kraft und während des Ein- und Auskuppelns der Kupplung eine Kraft auf die Tellerfeder ausübt, die im wesentlichen gleich der Kraft der Tellerfeder ist. Mit dieser Anordnung soll eine Betätigungsvorrichtung für eine Kupplung mit geringem Raumbedarf bereitgestellt werden, die bei einfachem Aufbau, geringem Energiebedarf und geringen Herstellkosten ein funktionsgerechtes Ein- und Auskuppeln ermöglicht. Es weist dabei diese Anordnung gegenüber den zuvor behandelten Betätigungsvorrichtungen insb. bei einer abgewandelten Ausführung mit zwei gegenüberliegenden Unterstützungsfedern hinsichtlich der Kraftverteilung bzw. des Reibungsverhaltens einige Vorteile auf, nachteilig ist allerdings auch hier wieder die relativ hohe effektive Belastung des Elektromotors, so daß auch hier eine Verbesserung des Aufbaus und der Funktionseigenschaften der Anordnung wiederum wünschenswert ist.

Ausgehend von diesen bekannten Vorrichtungen zur Betätigung einer Kupplung liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, d.h. es soll insb. die effektive Belastung des Elektromotors weiterhin reduziert werden, weiterhin soll die Anordnung hinsichtlich ihres Aufbaus und ihrer Funktionseigenschaften weiter verbessert werden, wobei sie z.B. auch für Anordnungen mit hohen Drehmomenten einsetzbar sein soll, dabei sollen insb. in den beiden Endzuständen der Kupplung stabile Zustände geschaffen werden, ohne dabei zusätzliche Energie z.B. über den Elektromotor aufbringen zu müssen. Die gewünschte Anordnung soll dabei auch einfach und kostengünstig herstellbar sein.

Die Aufgabe wird erfindungsgemäß dadurch gelöst, daß die Kompensationsfeder baulich getrennt von dem, im wesentlichen parallel zu dem auf das Ausrückelement einwirkenden Gewindetrieb angeordnet ist und daß zur Übertragung der Kraft der Kompensationsfeder auf den Gewindetrieb wenigstens ein auf die Mutter des Gewindetriebes einwirkender, durch die Kompensationsfeder federbelasteter Kniehebel vorgesehen ist. Auf diese Weise wird erstmalig mit einfachen Mitteln die Möglichkeit geschaffen, eine einfach aufgebaute und funktionsgerechte Kupplung-Betätigungseinrichtung bereitzustellen, die nur eine deutlich reduzierte effektive Belastung des Elektromotors benötigt, wobei die erfindungsgemäße Einrichtung auch für Anordnungen mit hohen Drehmomenten einsetzbar ist. Durch die geringere Belastung des Elektromotors ergibt sich eine geringere Größe, ein kompakter Aufbau und verbesserte Funktion. Weiterhin können durch die Übertragung der Kraft der Kompensationsfeder über den Kniehebel in den beiden Endzuständen der Kupplung stabile Zustände geschaffen werden, ohne dabei zusätzliche Energie z.B. über den Elektromotor aufbringen zu müssen bzw. ohne einen selbsthemmenden Gewindetrieb verwenden zu müssen. Dadurch können diese Endzustände über einen langen Zeitraum ohne die Gefahr einer Überhitzung des Motors beibehalten werden.

Demgemäß ist bei der bevorzugten Ausführungsform der vorliegenden Erfindung der auf die Mutter des Gewindetriebes einwirkende Kniehebel derart angeordnet, daß die Kompensationsfeder an den beiden Endpositionen der auf der Gewindespindel verschiebbaren Mutter einen stabilen Zustand bereitstellt. Diese stabilen Zustände können wie erwähnt beibehalten werden, ohne den Elektromotor verwenden zu müssen. Es empfiehlt sich dabei gemäß einem weiteren Ausgestaltungsmerkmal der vorliegenden Erfindung, daß der auf die Mutter des Gewindetriebes einwirkende Kniehebel derart angeordnet ist, daß in der Stellung "Kupplung vollständig geöffnet" die Kraft der Kompensationsfeder größer als die Schließkraft der Kupplung ist. Das bedeutet, daß die Betätigungseinrichtung die Kupplung ohne elektrische Energie offenhält. Nach einem weiteren Ausgestaltungsmerkmal der vorliegenden Erfindung ist dabei zweckmäßig der auf die Mutter des Gewindetriebes einwirkende Kniehebel derart angeordnet, daß sich in der Stellung "Kupplung vollständig geschlossen" die Kompensationsfeder etwas über ihre maximale Kompressionsstellung hinausbewegt und dadurch die Mutter des Gewindetriebes in ihre entsprechende Endposition drückt. Dadurch ist auch diese Position stabil, d.h., die Kupplung kann in beiden Endpositionen gehalten werden, ohne den Elektromotor verwenden zu müssen.

Es empfiehlt sich nach einem weiteren Ausgestaltungsmerkmal der vorliegenden Erfindung, daß die Kupplungs- Betätigungseinrichtung zur mechanischen translatorischen Betätigung der Kupplung durch das Ausrückelement der Kupplungs- Betätigungseinrichtung ausgebildet ist. Bei einer alternativen Ausführungsform der vorliegenden Erfindung ist die Kupplungs-Betätigungseinrichtung zur hydraulischen translatorischen Betätigung der Kupplung durch das Ausrückelement der Kupplungs- Betätigungseinrichtung ausgebildet. Es wirkt dabei das Ausrückelement auf einen in einem Geberzylinder der Kupplungs-Betätigungseinrichtung befindlichen Kolben ein, wobei der Geberzylinder wiederum über eine Zuleitung mit einem Nehmerzylinder in Wirkverbindung steht.

Nach einem weiteren Merkmal der vorliegenden Erfindung ist vorgesehen, daß die Mutter des Gewindetriebes zur Verdrehsicherung und zur translatorischen Führung diametral dem Angriffspunkt des Kniehebels gegenüberliegend ein oberseitig eine Führungsnut ausweisendes Führungselement aufweist, das mit der Führungsnut an einem in diesem Bereich am Gehäuse der Kupplungs- Betätigungseinrichtung angeordneten Führungssteg abläuft. Dabei empfiehlt es sich, daß der am Gehäuse der Kupplungs- Betätigungseinrichtung angeordnete Führungssteg endseitig jeweils einen Endanschlag für das Führungselement der translatorisch verschiebbaren Mutter des Gewindetriebes aufweist. Es wird dadurch die translatorische Bewegung der Mutter des Gewindetriebes in jeder Richtung begrenzt.

Zweckmäßig ist nach einem weiteren Ausgestaltungsmerkmal der vorliegenden Erfindung die Zuordnung des Kniehebels zu der Kompensationsfeder derart ausgebildet ist, daß die Kompensationsfeder bis zu ihrer maximalen Kompression zusammengedrückt wird, wenn der Winkel zwischen Kompensationsfeder und Kniehebel gleich null ist. Es empfiehlt sich dabei, daß die Zuordnung des Kniehebels zu der Kompensationsfeder derart ausgebildet ist, daß der effektive Hebelarm der Federkraft um den Lagerpunkt des Kniehebels sich mit Erhöhung des Winkels zwischen Kompensationsfeder und Kniehebel vergrößert. Dabei ist weiterhin zweckmäßig die Zuordnung des Kniehebels zu der Kompensationsfeder derart ausgebildet, daß die Federkraft der Kompensationsfeder abnimmt, wenn eine Bewegung weg von dem Zustand der maximalen Kompression der Kompressionsfeder zu einer Dehnung dieser Kompressionsfeder führt. Eine derartige Ausbildung führt zum einen dazu, daß, wenn die Mutter des Gewindetriebes sich von der Position, in der der Winkel zwischen Kompensatonsfeder und Kniehebel gleich null ist, weg bewegt, sich die Kraft nahezu linear mit der Bewegung der Mutter des Gewindetriebes erhöht. Zum anderen wird mit zunehmender Bewegung der Mutter des Gewindetriebes der andere Effekt verstärkt, daß die Federkraft der Kompensationsfeder abnimmt. Dies führt am Ende der Bewegungsbahn zu einem Absenken der effektiven Kraft.

Nach einem weiteren Ausgestaltungsmerkmal der vorliegenden Erfindung sind die Gewindespindel des Gewindetriebes und die Motorwelle des Elektromotors einstückig ausgebildet. Bei dieser Ausführungsform erübrigt sich abgesehen von der Lagerung am Elektromotor eine zusätzliche Lagerung für die Gewindespindel des Gewindetriebes.

Es empfiehlt sich nach einem weiteren Ausgestaltungsmerkmal der vorliegenden Erfindung, daß die Gewindespindel und die Mutter des Gewindetriebes ein Trapezgewinde aufweisen. Es ist dies eine in der Herstellung günstige Ausführungsform.

Bei einer anderen Ausführungsform der vorliegenden Erfindung ist vorgesehen, daß der Gewindetrieb der Kupplungs- Betätigungseinrichtung als Kugelgewindetrieb ausgebildet ist. Diese Ausführung hat einen besonders guten Wirkungsgrad.

Zur Erhöhung der Stellgenauigkeit des die Kupplung betätigenden Ausrückelementes sind verschiedene Arten der Wegsensierung möglich. Bei einer ersten Ausführung ist vorgesehen, daß zur Wegsensierung für den Gewindetrieb bzw. das translatorisch die Kupplung betätigende Ausrückelement eine mit der Motorwelle des Elektromotors gekuppelte Inkrementalsensorik ausgebildet ist. Bei einer anderen Ausführungsform ist vorgesehen, daß zur Wegsensierung für den Gewindetrieb bzw. das translatorisch die Kupplung betätigende Ausrückelement an dem Führungselement der Mutter des Gewindetriebes wenigstens ein Linearsensor ausgebildet ist. Bei der Ausführungsform mit hydraulisch translatorischer Betätigung der Kupplung ist vorgesehen, daß zur Wegsensierung für das translatorisch die Kupplung betätigende Ausrückelement an der Einrichtung zur hydraulischen translatorischen Betätigung der Kupplung wenigstens ein Linearsensor vorgesehen ist. Dies kann z.B. am Geberzylinder und/oder am Nehmerzylinder der Betätigungseinrichtung erfolgen.

Nach einem letzten Merkmal der vorliegenden Erfindung ist vorgesehen, daß die Kupplungs- Betätigungseinrichtung zwei in Bezug auf den Gewindetrieb diametral gegenüberliegende Kompensationsfedern aufweist, die jeweils über von diesen Kompensationsfedern federbelastete Kniehebel auf die Mutter des Gewindetriebes einwirken. Eine derartige Anordnung mit zwei gegenüberliegenden Federkomponenten ermöglicht eine besonders vorteilhafte Kraftverteilung bzw. ein vorteilhaftes Reibungsverhalten, da die sich gegenüberstehenden senkrechten, "überflüssigen" Komponenten im wesentlichen aufheben.

Die Erfindung ist in den Figuren der Zeichnung in mehreren Ausführungsbeispielen dargestellt. Es zeigen:
- Fig. 1: eine schematische, perspektivische Ansicht einer ersten Ausführungsform der erfindungsgemäßen Kupplungs-Betätigungseinrichtung für eine Fahrzeugkupplung mit entfernter Gehäuseabdeckung in der Stellung "Kupplung geöffnet",
- Fig. 2: die Ansicht der erfindungsgemäßen Kupplungs- Betätigungseinrichtung für eine Fahrzeugkupplung mit entfernter Gehäuseabdeckung gemäß Fig. 1 in der Stellung "Kupplung geschlossen",
- Fig.3: eine schematische Querschnittsansicht der erfindungsgemäßen Kupplungs- Betätigungseinrichtung gemäß Fig. 1 in der Stellung "Kupplung geöffnet",
- Fig. 4: die schematische Querschnittsansicht der erfindungsgemäßen Kupplungs- Betätigungseinrichtung gemäß Fig. 3 in der Stellung "Kupplung geschlossen",
- Fig. 5: eine schematische Querschnittsansicht einer zweiten Ausführungsform der erfindungsgemäßen Kupplungs- Betätigungseinrichtung mit zwei gegenüberliegenden Federkomponenten in der Stellung "Kupplung geöffnet",
- Fig. 6: die schematische Querschnittsansicht der erfindungsgemäßen Kupplungs- Betä tigungseinrichtung gemäß der Ausführungsform nach Fig. 5 in der Stellung "Kupplung geschlossen",
- Fig. 7: eine schematische Teil- Querschnittsansicht einer abgewandelten Ausführungsform der erfindungsgemäßen Kupplungs-Betätigungseinrichtung mit einer Einrichtung zur hydraulischen translatorischen Betätigung der Kupplung,
- Fig. 8: eine schematische Darstellung des Verlaufes der Ausrückkräfte der erfindungsgemäßen Kupplungs- Betätigungseinrichtung in Abhängigkeit des Ausrückweges.

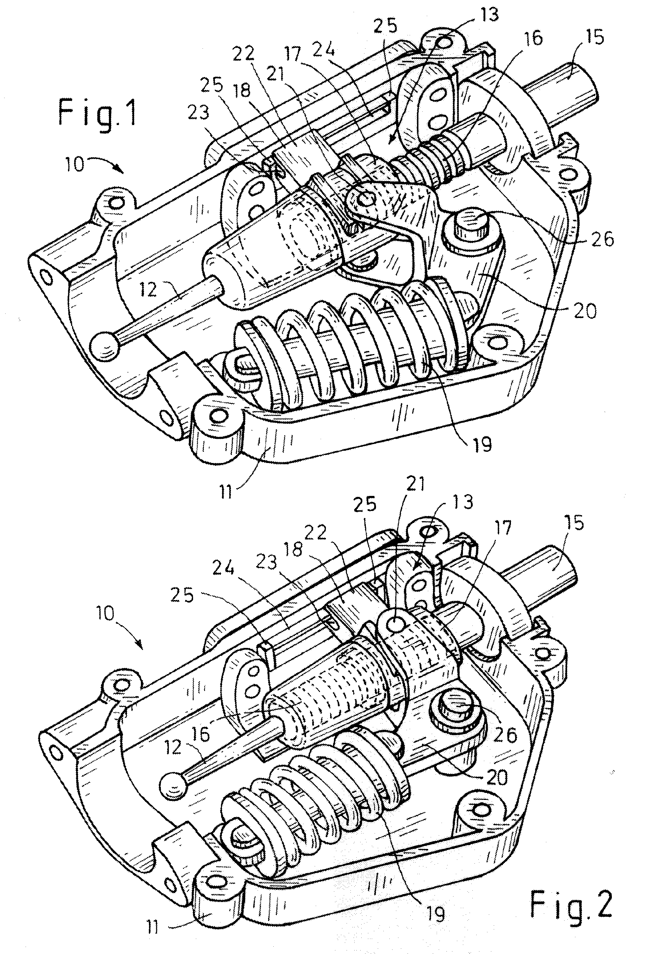

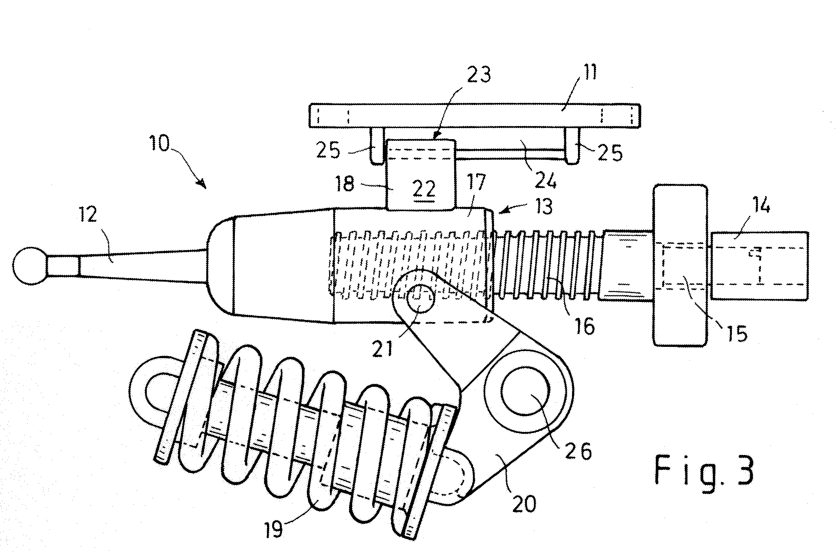

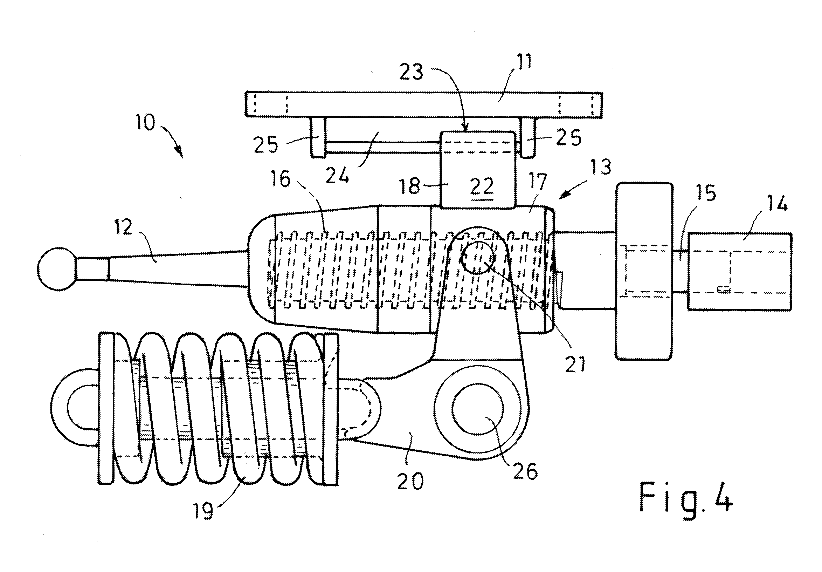

Die erfindungsgemäße Kupplungs- Betätigungseinrichtung ist eine solche elektromechanischer Bauart und ist generell mit 10 bezeichnet. Die Kupplungs-Betätigungseinrichtung 10 ist insbesondere vorgesehen für Fahrzeugkupplungen und umfaßt, siehe dazu insb. die Fig. 1 und 2 der Zeichnung, ein mit 11 bezeichnetes Gehäuse sowie eine damit zusammenwirkende, in den Fig. der Zeichnung nicht dargestellte, dazugehörige Gehäuseabdeckung. Die Kupplungs-Betätigungseinrichtung 10 umfaßt weiterhin ein translatorisch die Kupplung betätigendes Ausrückelement 12 und einen auf das Ausrückelement 12 über einen Gewindetrieb 13 einwirkenden Elektromotor 14. Dieser Elektromotor 14 ist schematisch z.B. in den Fig. 3 und 4 dargestellt. Dabei ist der Gewindetrieb 13 zur Umwandlung der von dem Elektromotor 14 ausgehenden Rotationsbewegung in eine Translationsbewegung für das Ausrückelement 12 ausgebildet. Der Gewindetrieb 13 umfaßt dabei im wesentlichen eine verdrehfest mit der Motorwelle 15 des Elektromotors 14 verbundene Gewindespindel 16 und eine axial auf dieser in jeder Richtung bis zu einer Endposition verschiebbare, eine Verdrehsicherung 18 aufweisende Mutter 17. Die Kupplungs- Betätigungseinrichtung 10 umfaßt weiterhin wenigstens eine die abzugebende Leistung des Elektromotors 14 verringernde, auf den Gewindetrieb 13 einwirkende Kompensationsfeder 19.

Es ist dabei erfindungsgemäß vorgesehen, daß die Kompensationsfeder 19 baulich getrennt von dem, im wesentlichen parallel zu dem auf das Ausrückelement 12 einwirkenden Gewindetrieb 13 angeordnet ist und daß zur Übertragung der Kraft der Kompensationsfeder 19 auf den Gewindetrieb 13 wenigstens ein auf die Mutter 17 des Gewindetriebes 13 einwirkender, durch die Kompensationsfeder 19 federbelasteter Kniehebel 20 vorgesehen ist. Es ist dabei in dem in den Fig. 1 bis 4 der Zeichnung dargestellten Ausführungsbeispiel genau ein auf die Mutter 17 des Gewindetriebes 13 einwirkender Kniehebel 20 vorgesehen, dieser ist dabei drehbar an einem an dem Gehäuse 11 der Kupplungs- Betätigungseinrichtung 10 angeordneten Lagerpunkt 26 gelagert. Die Kompensationsfeder 19 ist mit an sich bekannten, nicht bezeichneten Lagermitteln an dem Kniehebel 20 befestigt. Es ist dabei in den Fig. 1 und 3 die erfindungsgemäße Kupplungs- Betätigungseinrichtung 10 in der Stellung "Kupplung geöffnet" und in den Fig. 2 und 4 in der Stellung "Kupplung geschlossen" dargestellt.

Der auf die Mutter 17 des Gewindetriebes 13 einwirkende Kniehebel 20 ist derart angeordnet, daß die Kompensationsfeder 19 an den beiden Endpositionen der auf der Gewindespindel 16 verschiebbaren Mutter 17 einen stabilen Zustand bereitstellt. Es ist dabei der auf die Mutter 17 des Gewindetriebes 13 einwirkende Kniehebel 20 derart angeordnet, daß in der Stellung "Kupplung vollständig geöffnet" die Kraft der Kompensationsfeder 19 größer als die Schließkraft der Kupplung ist. Es hält damit die Betätigungseinrichtung 10 die Kupplung ohne elektrische Energie offen. Weiterhin ist der auf die Mutter 17 des Gewindetriebes 13 einwirkende Kniehebel 20 derart angeordnet, daß sich in der Stellung "Kupplung vollständig geschlossen" die Kompensationsfeder 19 etwas über ihre maximale Kompressionsstellung hinausbewegt und dadurch die Mutter 17 des Gewindetriebes 13 in ihre entsprechende Endposition drückt. Dadurch ist eben auch diese Position stabil, d.h., die Kupplung kann in beiden Endpositionen gehalten werden, ohne den Elektromotor 14 verwenden zu müssen.

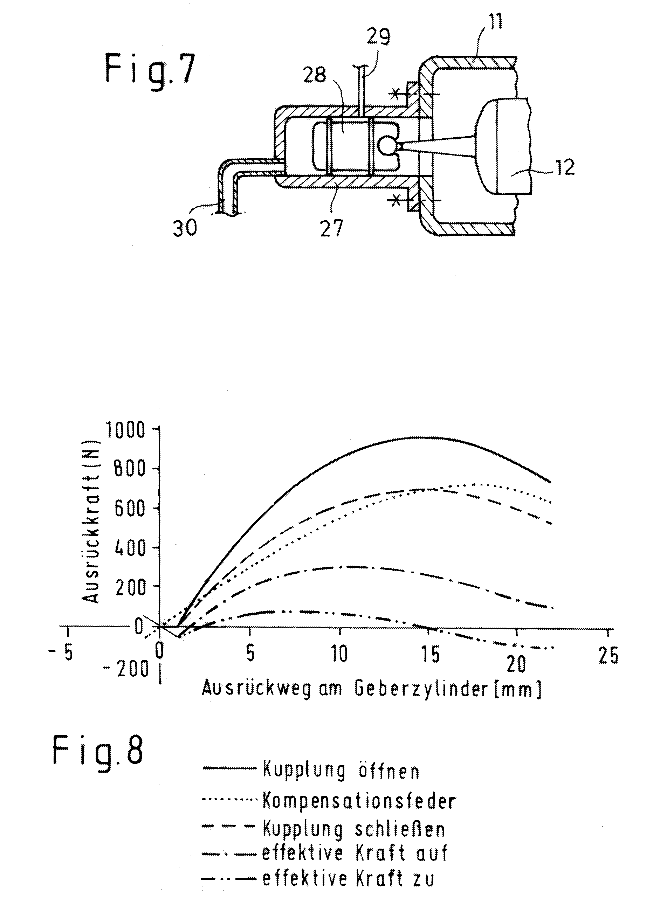

Die Kupplungs- Betätigungseinrichtung 10 ist bei einer Ausführungsform zur mechanischen translatorischen Betätigung der Kupplung durch das Ausrückelement 12 der Kupplungs- Betätigungseinrichtung 10 ausgebildet. Es wird dabei das Ausrückelement 12 direkt mechanisch z.B. auf ein in den Fig. der Zeichnung nicht dargestelltes Ausrücklager einer Kupplung einwirken, beispielsweise über einen Stößel und einen Ausrückhebel. Bei einer anderen Ausführungsform der vorliegenden Erfindung ist vorgesehen, daß die Kupplungs- Betätigungseinrichtung 10 zur hydraulischen translatorischen Betätigung der Kupplung durch das Ausrückelement 12 der Kupplungs- Betätigu ngseinrichtung 10 ausgebildet ist. Es wirkt dabei, siehe die Ausführungsform gemäß der Fig. 7, das Ausrückelement 12 auf einen in einem Geberzylinder 27 der Kupplungs- Betätigungseinrichtung 10 befindlichen Kolben 28 ein, wobei der Geberzylinder 27 wiederum über eine Zuleitung 30 mit einem Nehmerzylinder in Wirkverbindung steht. Die Zuleitung des Geberzylinders 27 zum Reservoir ist in der Fig. 7 mit 29 bezeichnet.

Die Mutter 17 des Gewindetriebes 13 weist zur Verdrehsicherung und zur translatorischen Führung, siehe insb. die Fig. 1 und 2 der Zeichnung, diametral dem Angriffspunkt 21 des Kniehebels 20 gegenüberliegend ein oberseitig eine Führungsnut 23 ausweisendes Führungselement 22 auf, das mit der Führungsnut 23 an einem in diesem Bereich am Gehäuse 11 der Kupplungs- Betätigungseinrichtung 10 angeordneten Führungssteg 24 abläuft. Dabei weist der am Gehäuse 11 der Kupplungs- Betätigungseinrichtung 10 angeordnete Führungssteg 24 endseitig, siehe dazu insb. die Fig. 3 und 4, jeweils einen Endanschlag 25 für das Führungselement 22 der translatorisch verschiebbaren Mutter 17 des Gewindetriebes 13 auf. Es wird dadurch die translatorische Bewegung der Mutter 17 des Gewindetriebes 13 in jeder Richtung begrenzt.

Die Zuordnung des Kniehebels 20 zu der Kompensationsfeder 19 ist derart ausgebildet, daß die Kompensationsfeder 19 bis zu ihrer maximalen Kompression zusammengedrückt wird, wenn der Winkel zwischen Kompensationsfeder 19 und Kniehebel 20 gleich null ist. Dieser Zustand ist in den Fig. 2 bzw. 4 der Zeichnung dargestellt. Es ist dabei zum einen weiterhin die Zuordnung des Kniehebels 20 zu der Kompensationsfeder 19 derart ausgebildet, daß der effektive Hebelarm der Federkraft um den Lagerpunkt 26 des Kniehebels 20 sich mit Erhöhung des Winkels zwischen Kompensationsfeder 19 und Kniehebel 20 vergrößert, siehe dazu Fig.1 im Vergleich zu Fig. 2 oder Fig. 3 im Vergleich zu Fig. 4. Zum anderen ist die Zuordnung des Kniehebels 20 zu der Kompensationsfeder 19 derart ausgebildet, daß die Federkraft der Kompensationsfeder 19 abnimmt, wenn eine Bewegung weg von dem Zustand der maximalen Kompression der Kompressionsfeder 19 zu einer Dehnung dieser Kompressionsfeder 19 führt. Eine derartige Ausbildung führt zum einen dazu, daß, wenn die Mutter 17 des Gewindetriebes 13 sich von der Position, in der der Winkel zwischen Kompensatonsfeder 19 und Kniehebel 20 gleich null ist, weg bewegt, sich die Kraft nahezu linear mit der Bewegung der Mutter 17 des Gewindetriebes 13 erhöht. Zum anderen wird mit zunehmender Bewegung der Mutter 17 des Gewindetriebes 13 der andere Effekt verstärkt, daß die Federkraft der Kompensationsfeder 19 abnimmt. Dies führt am Ende der Bewegungsbahn zu einem Abnehmen der Kraft. Dadurch wird ein Kraftverlauf erreicht, der dem einer üblichen Trockenkupplung annähernd entspricht, siehe weiter unten unter Figur 8.

Die Gewindespindel 16 des Gewindetriebes 13 und die Motorwelle 15 des Elektromotors 14 können einstückig ausgebildet sein, siehe dazu die Darstellung in den Fig. 3 und 4. Dadurch erübrigt sich abgesehen von der Lagerung am Elektromotor 14, die über bekannte nicht bezeichnete Lagermittel erfolgt, eine zusätzliche Lagerung für die Gewindespindel 16 des Gewindetriebes 13.

Der Gewindetrieb 13 der Kupplungs- Betätigungseinrichtung 10 kann unterschiedliche Ausgestaltung aufweisen. Prinzipiell kann jedes geeignete Bewegungsgewinde zum Einsatz kommen. Bei einer in der Herstellung besonders günstigen Ausführungsform weisen die Gewindespindel 16 und die Mutter 17 des Gewindetriebes 13 ein Trapezgewinde auf. Bei einer anderen Ausführungsform ist der Gewindetrieb 13 der Kupplungs- Betätigungseinrichtung 10 als Kugelgewindetrieb ausgebildet Diese Ausführung hat einen besonders guten Wirkungsgrad.

Zur Erhöhung der Stellgenauigkeit des die Kupplung betätigenden Ausrückelementes 12 sind verschiedene Arten der Wegsensierung möglich. Bei einer ersten Ausführungsform ist zur Wegsensierung für den Gewindetrieb 13 bzw. das translatorisch die Kupplung betätigende Ausrückelement 12 eine mit der Motorwelle 15 des Elektromotors 14 gekuppelte Inkrementalsensorik ausgebildet. Bei einer anderen Ausführungsform ist zur Wegsensierung für den Gewindetrieb 13 bzw. das translatorisch die Kupplung betätigende Ausrückelement 12 an dem Führungselement 22 der Mutter 17 des Gewindetriebes 13 wenigstens ein Linearsensor ausgebildet. Diese Ausführungsform ist in den Fig. der Zeichnung nicht dargestellt.

Bei der Ausführungsform mit hydraulisch translatorischer Betätigung der Kupplung ist vorgesehen, daß zur Wegsensierung für das translatorisch die Kupplung betätigende Ausrückelement 12 an der Einrichtung zur hydraulischen translatorischen Betätigung der Kupplung wenigstens ein Linearsensor ausgebildet ist. Dies kann z.B. am Geberzylinder 27 und/oder am in der Fig. 7 nicht dargestellten Nehmerzylinder der Betätigungseinrichtung 10 erfolgen. Die Wegsensierung kann aber auch wie im vorherigen Abschnitt beschrieben erfolgen.

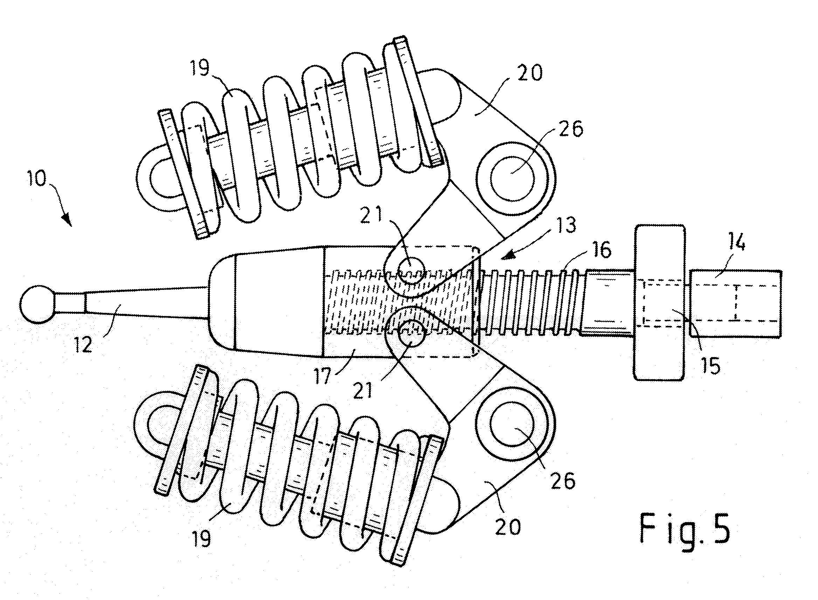

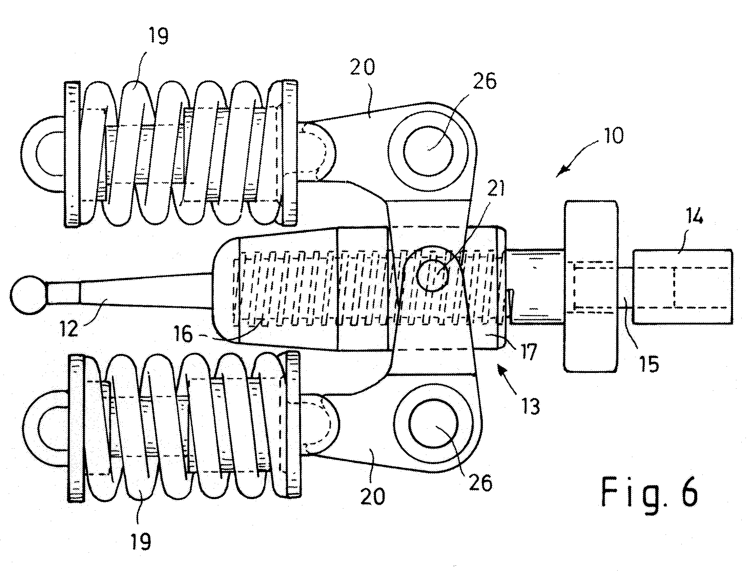

In den Fig. 5 und 6 der Zeichnung ist eine weitere Ausführungsform der erfindungsgemäßen Kupplungs- Betätigungseinrichtung 10 gezeigt. In diesem Falle weist die Kupplungs- Betätigungseinrichtung 10 zwei in Bezug auf den Gewindetrieb 13 diametral gegenüberliegende Kompensationsfedern 19 auf, die jeweils über von diesen Kompensationsfedern 19 federbelastete Kniehebel 20 auf die Mutter 17 des Gewindetriebes 13 einwirken. Es ist dazu in der Fig. 5 die erfindungsgemäße Kupplungs- Betätigungseinrichtung 10 mit zwei gegenüberliegenden Federkomponenten in der Stellung "Kupplung geöffnet" und in der Fig. 6 in der Stellung "Kupplung geschlossen" dargestellt. Eine solche Anordnung mit zwei gegenüberliegenden Federkomponenten ermöglicht eine besonders vorteilhafte Kraftverteilung, da die sich gegenüberstehenden senkrechten, "überflüssigen" Komponenten im wesentlichen aufheben. Bei dieser Ausführungsform gemäß Fig. 5 und 6 liegen das Führungselement 22 der Mutter 17 des Gewindetriebes 13 sowie der damit zusammenwirkende Führungssteg 24 nicht sichtbar in einem etwa senkrechten Winkel vor oder hinter der Kniehebelanordnung.

Mit der erfindungsgemäßen Vorrichtung wird die Möglichkeit geschaffen, eine einfach aufgebaute und funktionsgerechte Kupplung- Betätigungseinrichtung 10 bereitzustellen, die nur eine deutlich reduzierte effektive Belastung des Elektromotors 14 benötigt, wobei die erfindungsgemäße Einrichtung auch für Anordnungen mit hohen Drehmomenten bzw. hohen Kupplungsausrückkräften einsetzbar ist. Durch die geringere Belastung des Elektromotors 14 ergibt sich eine geringere Größe, ein kompakter Aufbau und verbesserte Funktion. Weiterhin können durch die Übertragung der Kraft der Kompensationsfeder 19 über den Kniehebel 20 in den beiden Endzuständen der Kupplung stabile Zustände geschaffen werden, ohne dabei zusätzliche Energie z.B. über den Elektromotor 14 aufbringen zu müssen bzw. ohne einen selbsthemmenden Gewindetrieb 13 verwenden zu müssen. Dadurch können diese Endzustände über einen langen Zeitraum ohne die Gefahr einer Überhitzung des Motors beibehalten werden. Auch auf zusätzliche mechanische Hilfsmittel (z.B. Arretierung) oder elektrische Hilfsmittel (z.B. Motorbremse) zu Sicherstellung eines stabilen Zustandes kann verzichtet werden.

Durch eine Auswahl geeigneter Dimensionen für die Kompensationfeder 19 und den Kniehebel 20 kann die resultierende Kraftkurve gut einer Kupplungs-Entlastungskurve zugeordnet werden. Da der Elektromotor 14 lediglich die Kraft für die Differenz zwischen der effektiven Kompensationsfederkraft und der Kupplungskraft liefern muß, kann eine erhebliche Reduzierung des erforderlichen Motordrehmomentes realisiert werden. Dies führt zu einer geringeren erforderlichen Motorgröße und/oder zu einer Verbesserung der Funktionsleistung. Bezüglich des wesentlich verbesserten Kraftverlaufes der Ausrückkraft sei auch auf die Darstellung in Fig. 8 verwiesen. Es ist hier schematisch der Verlauf der Ausrückkräfte der erfindungsgemäßen Kupplungs- Betätigungseinrichtung 10 in Abhängigkeit des Ausrückweges dargestellt, und zwar für die Ausrückkräfte in den Betriebszuständen "Kupplung öffnen" bzw. "Kupplung schließen", für die Ausrückkraft der Kompensationsfeder 19, sowie für die effektiven Ausrückkräfte in den Betriebszuständen "öffnen" bzw. "schließen". Es ist in dieser Fig. 8 eine erhebliche Reduzierung dieser effektiven Ausrückkräfte durch die Verwendung der erfindungsgemäßen Anordnung für die angegebenen beiden Betriebszustände zu erkennen.

Mit der erfindungsgemäßen Kompensationsfeder- Kniehebel - Anordnung wird ein guter Kompromiß der folgenden Problematik erzielt:

Ein Gewindetrieb 13 für eine Kupplungs- Betätigungseinrichtung 10 sollte einen guten Wirkungsgrad aufweisen, weil ein schlechter Wirkungsgrad durch einen größeren Elektromotor 14 ausgeglichen werden muß. Der negative Effekt eines Gewindetriebes 13 mit gutem Wirkungsgrad ist das Fehlen von Selbsthemmung; eine Selbsthemmung ermöglicht der Betätigungseinrichtung jedoch das Verbleiben in seiner Position, ohne den Elektromotor 14 verwenden zu müssen. Die erfindungsgemäße Anordnung realisiert wie gesehen diese Merkmale für den vollständig geöffneten und den vollständig geschlossenen Zustand der Kupplung, ohne einen selbsthemmenden Gewindetrieb 13 zu verwenden; die erfindungsgemäße Anordnung kann daher auch bei einem hoch effizienten Gewindetrieb 13 mit sehr niedriger Reibung verwendet werden.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So sind insb. Abwandlungen hinsichtlich des Zusammenwirkens der Kompensationsfeder 19 mit dem Kniehebel 20 denkbar, weiterhin vorgesehen sind Variationen hinsichtlich der Art und Anzahl von Kompensationsfedern 19 und Kniehebeln 20 und der Ausbildung und Führung des Gewindetriebes 13. Denkbar ist auch, die Art der Betätigung der Kupplung durch das Ausrückelement 12 zu variieren.

### BEZUGSZEICHENLISTE

- 10: Kupplungs- Betätigungseinrichtung
- 11: Gehäuse (von 10)
- 12: Ausrückelement (von 10)
- 13: Gewindetrieb
- 14: Elektromotor
- 15: Motorwelle (von 14)
- 16: Gewindespindel (von 13)
- 17: Mutter (von 13)
- 18: Verdrehsicherung (von 17)
- 19: Kompressionsfeder
- 20: Kniehebel
- 21: Angriffspunkt (von 20 an 17)
- 22: Führungselement (von 17)
- 23: Führungsnut (an 22)
- 24: Führungssteg (an 11)
- 25: Endanschlag (an 24 für 22)
- 26: Lagerpunkt (von 20)
- 27: Geberzylinder
- 28: Kolben
- 29: Zuleitung zum Reservoir
- 30: Leitung zum Nehmerzylinder

## Patentansprüche

1. Kupplungs- Betätigungseinrichtung (10) elektromechanischer Bauart insb. für eine Fahrzeugkupplung, umfassend ein Gehäuse (11) mit einer dazugehörigen Gehäuseabdeckung, ein translatorisch die Kupplung betätigendes Ausrückelement (12), einen auf das Ausrückelement (12) über einen Gewindetrieb (13) einwirkenden Elektromotor (14), wobei der Gewindetrieb (13) zur Umwandlung der von dem Elektromotor (14) ausgehenden Rotationsbewegung in eine Translationsbewegung für das Ausrückelement (12) ausgebildet ist und wobei der Gewindetrieb (13) im wesentlichen eine verdrehfest mit der Motorwelle (15) des Elektromotors (14) verbundene Gewindespindel (16) und eine axial auf dieser in jeder Richtung bis zu einer Endposition verschiebbare, eine Verdrehsicherung (18) aufweisende Mutter (17) umfaßt, und umfassend wenigstens eine die abzugebende Leistung des Elektromotors (14) verringernde, auf den Gewindetrieb (13) einwirkende Kompensationsfeder (19),
**dadurch gekennzeichnet, daß**
die Kompensationsfeder (19) baulich getrennt von dem, im wesentlichen parallel zu dem auf das Ausrückelement (12) einwirkenden Gewindetrieb (13) angeordnet ist und daß zur Übertragung der Kraft der Kompensationsfeder (19) auf den Gewindetrieb (13) wenigstens ein auf die Mutter (17) des Gewindetriebes (13) einwirkender, durch die Kompensationsfeder (19) federbelasteter Kniehebel (20) vorgesehen ist.

2. Kupplungs- Betätigungseinrichtung nach Anspruch 1,
**dadurch gekennzeichnet, daß**
der auf die Mutter (17) des Gewindetriebes (13) einwirkende Kniehebel (20) derart angeordnet ist, daß die Kompensationsfeder (19) an den beiden Endpositionen der auf der Gewindespindel (16) verschiebbaren Mutter (17) einen stabilen Zustand bereitstellt.

3. Kupplungs- Betätigungseinrichtung nach Anspruch 2,
**dadurch gekennzeichnet, daß**
der auf die Mutter (17) des Gewindetriebes (13) einwirkende Kniehebel (20) derart angeordnet ist, daß in der Stellung "Kupplung vollständig geöffnet" die Kraft der Kompensationsfeder (19) mindestens so groß wie die Schließkraft der Kupplung ist.

4. Kupplungs- Betätigungseinrichtung nach Anspruch 2 oder 3,
**dadurch gekennzeichnet, daß**
der auf die Mutter (17) des Gewindetriebes (13) einwirkende Kniehebel (20) derart angeordnet ist, daß sich in der Stellung "Kupplung vollständig geschlossen" die Kompensationsfeder (19) etwas über ihre maximale Kompressionsstellung hinausbewegt und dadurch die Mutter (17) des Gewindetriebes (13) in ihre entsprechende Endposition drückt.

5. Kupplungs- Betätigungseinrichtung nach einem der Ansprüche 1 bis 4,
**dadurch gekennzeichnet, daß**
die Kupplungs- Betätigungseinrichtung (10) zur mechanischen translatorischen Betätigung der Kupplung durch das Ausrückelement (12) der Kupplungs- Betätigungseinrichtung (10) ausgebildet ist.

6. Kupplungs- Betätigungseinrichtung nach einem der Ansprüche 1 bis 4,
**dadurch gekennzeichnet, daß**
die Kupplungs- Betätigungseinrichtung (10) zur hydraulischen translatorischen Betätigung der Kupplung durch das Ausrückelement (12) der Kupplungs-Betätigungseinrichtung (10) ausgebildet ist.

7. Kupplungs- Betätigungseinrichtung nach einem der Ansprüche 1 bis 6,
**dadurch gekennzeichnet, daß**
die Mutter (17) des Gewindetriebes (13) zur Verdrehsicherung und zur translatorischen Führung diametral dem Angriffspunkt (21) des Kniehebels (20) gegenüberliegend ein oberseitig eine Führungsnut (23) ausweisendes Führungselement (22) aufweist, das mit der Führungsnut (23) an einem in diesem Bereich am Gehäuse (11) der Kupplungs- Betätigungseinrichtung (10) angeordneten Führungssteg (24) abläuft.

8. Kupplungs- Betätigungseinrichtung nach Anspruch 7,
**dadurch gekennzeichnet, daß**
der am Gehäuse (11) der Kupplungs- Betätigungseinrichtung (10) angeordnete Führungssteg (24) endseitig jeweils einen Endanschlag (25) für das Führungselement (22) der translatorisch verschiebbaren Mutter (17) des Gewindetriebes (13) aufweist.

9. Kupplungs- Betätigungseinrichtung nach einem der Ansprüche 1 bis 8,
**dadurch gekennzeichnet, daß**
die Zuordnung des Kniehebels (20) zu der Kompensationsfeder (19) derart ausgebildet ist, daß die Kompensationsfeder (19) bis zu ihrer maximalen Kompression zusammengedrückt wird, wenn der Winkel zwischen Kompensationsfeder (19) und Kniehebel (20) gleich null ist.

10. Kupplungs- Betätigungseinrichtung nach einem der Ansprüche 1 bis 9,
**dadurch gekennzeichnet, daß**
die Zuordnung des Kniehebels (20) zu der Kompensationsfeder (19) derart ausgebildet ist, daß der effektive Hebelarm der Federkraft um den Lagerpunkt (26) des Kniehebels (20) sich mit Erhöhung des Winkels zwischen Kompensationsfeder (19) und Kniehebel (20) vergrößert.

11. Kupplungs- Betätigungseinrichtung nach einem der Ansprüche 1 bis 10,
**dadurch gekennzeichnet, daß**
die Zuordnung des Kniehebels (20) zu der Kompensationsfeder (19) derart ausgebildet ist, daß die Federkraft der Kompensationsfeder (19) abnimmt, wenn eine Bewegung weg von dem Zustand der maximalen Kompression der Kompressionsfeder (19) zu einer Dehnung dieser Kompressionsfeder (19) führt.

12. Kupplungs- Betätigungseinrichtung nach einem der Ansprüche 1 bis 11,
**dadurch gekennzeichnet, daß**
die Gewindespindel (16) des Gewindetriebes (13) und die Motorwelle (15) des Elektromotors (14) einstückig ausgebildet sind.

13. Kupplungs- Betätigungseinrichtung nach einem der Ansprüche 1 bis 12,
**dadurch gekennzeichnet, daß**
die Gewindespindel (16) und die Mutter (17) des Gewindetriebes (13) ein Trapezgewinde aufweisen.

14. Kupplungs- Betätigungseinrichtung nach einem der Ansprüche 1 bis 12,
**dadurch gekennzeichnet, daß**
der Gewindetrieb (13) der Kupplungs- Betätigungseinrichtung (10) als Kugelgewindetrieb ausgebildet ist.

15. Kupplungs- Betätigungseinrichtung nach einem der Ansprüche 1 bis 14,
**dadurch gekennzeichnet, daß**
zur Wegsensierung für den Gewindetrieb (13) bzw. das translatorisch die Kupplung betätigende Ausrückelement (12) eine mit der Motorwelle (15) des Elektromotors (14) gekuppelte Inkrementalsensorik ausgebildet ist.

16. Kupplungs- Betätigungseinrichtung nach einem der Ansprüche 1 bis 14,
**dadurch gekennzeichnet, daß**
zur Wegsensierung für den Gewindetrieb (13) bzw. das translatorisch die Kupplung betätigende Ausrückelement (12) an dem Führungselement (22) der Mutter (17) des Gewindetriebes (13) wenigstens ein Linearsensor ausgebildet ist.

17. Kupplungs- Betätigungseinrichtung nach einem der Ansprüche 1 bis 14,
**dadurch gekennzeichnet, daß**
zur Wegsensierung für das translatorisch die Kupplung betätigende Ausrückelement (12) an der Einrichtung zur hydraulischen translatorischen Betätigung der Kupplung wenigstens ein Linearsensor vorgesehen ist.

18. Kupplungs- Betätigungseinrichtung nach einem der Ansprüche 1 bis 17,
**dadurch gekennzeichnet, daß**
die Kupplungs- Betätigungseinrichtung (10) zwei in Bezug auf den Gewindetrieb (13) diametral gegenüberliegende Kompensationsfedern (19) aufweist, die jeweils über von diesen Kompensationsfedern (19) federbelastete Kniehebel (20) auf die Mutter (17) des Gewindetriebes (13) einwirken.
